# FASCICULE DE BREVET EUROPEEN

(11) **EP 0 710 683 B1**
(45) Date de publication et mention de la délivrance du brevet: **24.05.2000**
(21) Numéro de dépôt: 95420284.2
(22) Date de dépôt: 16.10.1995
(51) Int. Cl.: C08G 18/64

(54) **Promoteur d'adhésion d'une composition adhésive de polyuréthane**
Haftvermittler für Polyurethan-Klebstoffzusammensetzungen
Adhesion promoter for polyurethane adhesive compositions

(30) Priorité: 03.11.1994 FR 9413415
(43) Date de publication de la demande: 08.05.1996
(73) Titulaire: HOSPAL INDUSTRIE S.A., F-69883 Meyzieu Cédex (FR)
(72) Inventeur: Esposito, Guy, F-01700 Beynost (FR); Clermont, Christian, F-69480 Anse (FR)
(74) Mandataire: Tilloy, Anne-Marie

(56) Documents cités:
- GB-A- 2 029 725
- US-A- 4 244 817
- DATABASE WPI Week 8547 Derwent Publications Ltd., London, GB; AN 85-292238 & JP-A-60 199 601 (MATSUSHITA ELEC WORKS)
- DATABASE WPI Week 9408 Derwent Publications Ltd., London, GB; AN 94-062192 & JP-A-06 016 989 (DAINIPPON INK & CHEM KK)

## Description

La présente invention a pour objet l'utilisation de la polyéthylèneimine comme promoteur d'adhésion destiné à coopérer avec une composition adhésive de polyuréthane apte à former, selon le cas :
. une cloison cylindrique de séparation des deux compartiments d'un échangeur sous la forme d'un faisceau de fibres creuses. L'opération consistant à réaliser une telle cloison de séparation est usuellement désignée sous le vocable d'empotage ;
. ou un joint étanche dans un échangeur sous la forme de membranes planes. L'opération consistant à réaliser un tel joint est usuellement désignée sous le vocable de garnissage d'étanchéité. Néanmoins, afin de simplifier la présente description, cette opération sera également désignée sous le vocable d'empotage.

Toujours dans un souci de clarté de la présente description, le vocable de joint sera utilisé pour désigner indifféremment un joint étanche dans des échangeurs sous la forme de membranes planes ou une cloison cylindrique de séparation dans des échangeurs sous la forme d'un faisceau de fibres creuses.

La présente invention est utile pour la fabrication des échangeurs pour des applications de filtration industrielle ainsi que pour des applications biomédicales sous la forme, par exemple, de dialyseurs, hémofiltres et oxygénateurs.

L'invention a également pour objet deux procédés de mise en oeuvre de ce promoteur d'adhésion en vue de la fabrication d'un joint étanche à base d'une composition adhésive de polyuréthane, dans des échangeurs sous la forme de membranes planes ou d'un faisceau de fibres creuses.

Enfin, l'invention a pour objet une composition adhésive de polyuréthane renfermant au moins une polyéthylèneimine, utile pour la réalisation d'un joint étanche dans des échangeurs sous la forme de membranes planes ou d'un faisceau de fibres creuses.

### ETAT DE LA TECHNIQUE

Il est de pratique courante de préparer un joint étanche autour des canaux formés par des membranes planes pliées ou des fibres creuses d'un échangeur à partir d'une composition adhésive de polyuréthane comprenant, avant polymérisation, un polyisocyanate, un polyol et, éventuellement, un ou plusieurs agents réticulants polyfonctionnels.

La composition adhésive de polyuréthane, une fois qu'elle est durcie, a pour fonction essentielle de former un joint étanche afin qu'il n'y ait pas d'infiltration entre les deux compartiments des échangeurs ou avec l'extérieur. Le risque d'infiltration doit, en particulier, être évité entre le compartiment à sang et le compartiment à dialysat des échangeurs biomédicaux pour le traitement du sang.

Pour ce faire, la composition adhésive de polyuréthane durcie doit présenter une adhérence satisfaisante avec les membranes semi-perméables des échangeurs, quelle que soit la nature chimique des matières qui les constituent. Mais, avec certaines matières particulières comme les (co)polyacrylonitriles, les compositions adhésives de polyuréthane classiques ne donnent pas entière satisfaction en raison des quantités non négligeables de glycérine que renferment les membranes semi-perméables faites avec ces matières et de la présence d'humidité.

C'est pourquoi, une préoccupation majeure de la branche professionnelle concernée a été l'amélioration du degré d'adhérence des compositions adhésives de polyuréthane avec les membranes semi-perméables des échangeurs.

Bien entendu, dans le cas des échangeurs à usage biomédical, cette amélioration du degré d'adhérence ne doit pas se faire au détriment des autres qualités exigées, en particulier de l'innocuité des compositions adhésives de polyuréthane durcies.

Diverses solutions ont été proposées antérieurement à cet effet. Ainsi, il a été proposé, dans la demande européenne n° 0329474, une composition adhésive de polyuréthane durcie comprenant le produit de réaction d'un polyisocyanate organique, d'un polyol d'un ester liquide d'un acide carboxylique ayant au moins 8 atomes de carbone et d'un composant de poids amine équivalent compris entre 30 et 4000 en une quantité suffisante pour conférer au polyuréthane une adhérence améliorée aux fibres creuses ou membranes semi-perméables.

De préférence, le composant amine représente de 0,2 à 16 % (par équivalent) de la composition totale de polyuréthane.

Au vu des résultats apparaissant dans la demande européenne n° 0329474, une teneur plutôt élevée en composant amine est souhaitable pour atteindre un bon degré d'adhérence.

En outre, seuls sont cités des composants amines plutôt hydrophobes car ils sont compatibles avec les autres composants nécessaires à la préparation de la composition adhésive de polyuréthane.

Néanmoins, il semble que, dès que les composants amine et polyol sont mélangés à la préparation servant à la formation d'uréthane, le polyol devient instable : les résultats obtenus suite à l'empotage seraient diminués en terme d'adhésion du polyuréthane avec les membranes semi-perméables (voir la demande européenne n°0573310). Or, de tels défauts peuvent habituellement conduire à un dysfonctionnement de l'échangeur.

C'est pourquoi, du fait de l'instabilité du polyol lorsqu'on ajoute le composant amine, les compositions adhésives de polyuréthane décrites dans la demande européenne n° 0329474 doivent être formulées en trois composants. Ceci rend leur mise en oeuvre difficile et onéreuse.

Un autre inconvénient de la solution proposée par la demande européenne n° 0329474 réside dans le caractère plutôt hydrophobe des amines cités et, dans certains cas, dans leur caractère amphotère. De ce fait, ces composés peuvent être toxiques et, en conséquence, affecter les conditions d'hygiène, de sécurité et de santé des fabricants des échangeurs.

Pour résoudre les nombreux problèmes générés par les compositions décrites dans la demande européenne n° 0329474, il a alors été proposé, dans la demande européenne n° 0573310, d'introduire à titre de promoteur d'adhésion, dans des compositions adhésives de polyuréthane, des composants amines particuliers, répondant à la formule générale (I) : 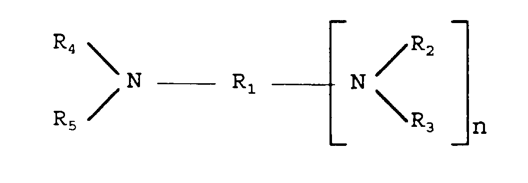 dans laquelle :
. R₁ représente un groupe alkyle qui comporte de 1 à 10 atomes de carbone, de préférence 3 atomes de carbone ;
. R₄ représente un groupe alkyle qui comporte de 8 à 25 atomes de carbone, de préférence 18 atomes de carbone ;
. R₂, R₃ et R₅ sont indépendamment choisis parmi :
   - les alcools aliphatiques saturés qui comportent de 1 à 10 atomes de carbone,
   - les alcools aliphatiques insaturés qui comportent de 2 à 10 atomes de carbone,
   et représentés préférentiellement par CH₃CH₂OH ;
. n est égal à 1 ou 2, de préférence à 1.

Mais, les composants amines de formule générale (I) présentent un caractère plutôt hydrophobe et, dès lors, peuvent aussi représenter un danger pour la santé et la sécurité du fabricant de l'échangeur qui renferme ces amines.

### EXPOSE SOMMAIRE DE L'INVENTION

De manière surprenante, la demanderesse a trouvé qu'il est possible d'obtenir l'adhérence nécessaire pour former un joint étanche dans des échangeurs à membrane semi-perméable chargée négativement en utilisant la polyéthylèneimine à titre de promoteur d'adhésion des compositions adhésives de polyuréthane.

Par membrane semi-perméable chargée négativement, la demanderesse entend, dans le cadre de la présente invention, une membrane contenant des charges négatives en excès détectables, en particulier par les mesures d'écoulement (potentiel zéta).

En effet, à la différence des solutions connues à cette date, le promoteur d'adhésion choisi par la demanderesse est hydrophile et hydrosoluble et, de ce fait, a priori plus difficile à incorporer dans un milieu plutôt lipophile comme les polyols ou dans un mélange d'isocyanates et de polyols.

Au contraire, la demanderesse a trouvé que la préparation d'une composition adhésive de polyuréthane incorporant la polyéthylèneimine à titre de promoteur d'adhésion est simple, ne produit pas d'instabilité des polyols auxquels elle est mélangée et, en outre, favorise l'obtention de performances élevées sur le plan de l'adhérence de la composition adhésive durcie avec les membranes semi-perméables, même si celles-ci contiennent de la glycérine ou d'autres agents hydrophiles similaires ainsi que de l'humidité.

Un autre avantage de la polyéthylèneimine, de première importance pour les échangeurs à usage biomédical, réside dans l'absence de problème de toxicité de ce promoteur d'adhésion, à la différence de certains promoteurs d'adhésion connus qui peuvent être toxiques en raison de leur caractère plutôt hydrophobe, voire dans certains cas de leur caractère amphotère marqué.

L'invention a également pour objet deux procédés de mise en oeuvre de la polyéthylèneimine à titre de promoteur d'adhésion pour la fabrication d'un joint étanche dans des échangeurs sous la forme de membranes planes ou d'un faisceau de fibres creuses au moyen d'une composition adhésive de polyuréthane.

Le premier procédé comprend principalement les étapes de :
a1) traiter la surface extérieure des canaux formés par les membranes planes ou des fibres creuses afin de la revêtir avec le promoteur d'adhésion constitué d'au moins une polyéthylèneimine ;
b1) encapsuler ou enrober les extrémités desdits canaux ou desdites fibres creuses dans le mélange liquide d'une composition adhésive de polyuréthane avant que ce mélange ne se gélifie ;
c1) puis, procéder aux opérations habituelles et bien connues de l'homme de l'art pour former, selon le cas:
   . un joint étanche dans des échangeurs sous la forme de membranes planes,
   . ou une cloison cylindrique de séparation dans des échangeurs sous la forme d'un faisceau de fibres creuses.

Le second procédé comprend principalement les étapes de :
a2) préparer une composition adhésive de polyuréthane renfermant, à titre de promoteur d'adhésion, au moins une polyéthylèneimine ;
b2) encapsuler ou enrober les extrémités desdits canaux ou desdites fibres creuses dans le mélange liquide de la composition adhésive de polyuréthane obtenue à l'issue de l'étape (a2) avant que ce mélange ne se gélifie ;
c2) puis, procéder aux opérations habituelles et bien connues de l'homme de l'art pour former, selon le cas:
   . un joint étanche dans des échangeurs sous la forme de membranes planes,
   . ou une cloison cylindrique de séparation dans des échangeurs sous la forme d'un faisceau de fibres creuses.

Comme mentionné plus haut, un autre objet de la présente invention est la composition adhésive de polyuréthane mise en oeuvre dans le second procédé ci-avant, cette composition étant caractérisée en ce qu'elle renferme au moins une polyéthylèneimine à titre de promoteur d'adhésion.

### DESCRIPTION DE L'INVENTION

Une caractéristique essentielle de la présente invention réside dans l'utilisation de la polyéthylèneimine à titre de promoteur d'adhésion dans les compositions adhésives de polyuréthane.

On entend par polyéthylèneimine, ci-après dénommée PEI, le produit de la polymérisation de l'éthylèneimine. C'est une polyamine aliphatique hautement ramifiée avec des groupements amines primaires / secondaires / tertiaires dans un rapport molaire en général d'environ 1 / 2 / 1.

La masse moléculaire moyenne de la PEI n'est pas critique. Ainsi, elle peut varier de 600 à 60000 dans le cas où la PEI sert à traiter la surface extérieure des membranes semi-perméables (premier procédé précité). En revanche, si la PEI est incorporée dans la composition adhésive de polyuréthane (second procédé précité), on recommande de limiter sa masse moléculaire moyenne entre 200 et 20000 car, au-delà de cette valeur, la PEI, qui est alors très visqueuse, est difficile à mettre en oeuvre.

Toujours dans le cadre du second procédé précité, on préfère recourir à des PEI de masse moléculaire moyenne variant de 600 à 10000, plus aisées à mettre en oeuvre du fait de leur viscosité plus faible à température ambiante dans cet intervalle. La PEI de masse moléculaire moyenne 600 sera préférée du fait qu'il n'est pas nécessaire de la chauffer pour l'incorporer à l'un ou l'ensemble des composants de la composition adhésive de polyuréthane.

Dans le cadre de l'invention, on peut aussi utiliser, à titre de promoteur d'adhésion, un mélange de PEI différant entre elles par leurs masses moléculaires moyennes.

Comme mentionnée plus haut, la PEI est :
. soit appliquée sur la surface extérieure des fibres ou des canaux formés par les membranes semi-perméables planes (premier procédé),
. soit mélangée avec l'un ou plusieurs des composants servant à préparer une composition adhésive de polyuréthane (second procédé).

Dans le cadre du premier procédé, l'application de la PEI peut être réalisée de la façon suivante : dans un bac contenant une solution aqueuse de PEI, on fait défiler, de préférence en continu, la fibre creuse ou la membrane plane.

Selon la masse moléculaire moyenne de la PEI, on adapte le temps de contact entre la fibre creuse ou la membrane plane et la solution de PEI, en imposant une vitesse de défilement déterminée. Ainsi, pour limiter l'éventuelle diffusion de la PEI dans la masse de la membrane, on limite d'autant plus le temps de contact que la masse moléculaire moyenne de le PEI est petite.

L'application de la PEI sur la surface externe de la fibre creuse ou la membrane plane peut être faite en même temps que le glycérinage si l'on dissout la PEI dans la solution de glycérine.

Dans le cadre du second procédé, on peut préparer la composition adhésive de polyuréthane de manière connue en soi.

Conformément à une variante préférée du second procédé, on prépare la composition adhésive de polyuréthane renfermant la PEI à partir de deux composants, qui sont conservés séparément, respectivement un premier composant constitué d'au moins un polyol et d'au moins une PEI et, éventuellement, d'un catalyseur, un second composant constitué d'au moins un polyisocyanate, ces deux composants étant mélangés au moment de la fabrication du joint étanche de polyuréthane. Il est à noter que le premier composant présente une très bonne stabilité au stockage à température ambiante, supérieure à 1 mois.

Comme indiqué plus haut, le premier composant peut tout aussi bien comprendre une PEI ou un mélange de PEI de différentes masses moléculaires moyennes.

Egalement, la composition adhésive de polyuréthane selon l'invention peut être présentée, avant utilisation, en trois composants, respectivement un premier composant constitué d'au moins un polyol et éventuellement d'un catalyseur, un second composant constitué d'au moins une PEI et un troisième composant constitué d'au moins un polyisocyanate, ces trois composants étant mélangés au moment de la fabrication du joint étanche de polyuréthane.

La quantité de PEI à incorporer dans la composition adhésive de polyuréthane pour atteindre une adhésion satisfaisante de cette composition avec la membrane semi-perméable est faible ; elle est généralement comprise entre 0,065 et 2,6 % d'équivalent amine [ce pourcentage correspondant au pourcentage de groupement amine rapporté à la somme des autres groupements présents qui sont les groupements alcool (OH) et isocyanate (NCO)]. De préférence, cette quantité de PEI est comprise entre 0,13 et 1,3 % d'équivalent amine.

En effet, un avantage important des compositions adhésives de polyuréthane selon l'invention réside dans le fait que la quantité en PEI est moins importante que la quantité en amine jouant le rôle de promoteur d'adhésion dans les compositions décrites dans les demandes européennes n° 0329474 et n° 0573310. De plus, le degré d'adhésion des compositions selon l'invention sur les membranes semi-perméables glycérinées, et éventuellement humides, est supérieur à celui des compositions décrites dans ces demandes.

A titre d'exemples de polyols susceptibles de convenir à la préparation des compositions adhésives de polyuréthane utiles à la mise en oeuvre des premier et second procédés de l'invention, on peut citer : l'huile de ricin, les esters de l'huile de ricin, des polyéthers tels que le polyoxypropylène-glycol et le polytétraméthylène-glycol, des homopolymères ou copolymères de butadiène portant des groupes hydroxy et des polyesters portant des groupements hydroxy tels que l'adipate de polyéthylène glycol, et similaires : la N,N,N',N'-tétrakis(hydroxy-propyl)éthylène diamine; et leurs combinaisons.

A titre d'exemples de polyisocyanates susceptibles de convenir à la préparation des compositions adhésives de polyuréthane utiles à la mise en oeuvre des premier et second procédés de l'invention, on peut citer : tous les isocyanates ou polyisocyanates, incluant les mono- ou diisocyanates. De préférence, on choisit des polyisocyanates qui ont de préférence au moins deux groupes NCO par molécule, mais pas d'autres substituants capables de réagir avec les groupes hydroxyles des polyols.

Les diisocyanates organiques appropriés pour la présente invention sont bien connus de l'homme de l'art. On peut citer les arylène-diisocyanates représentés par les diisocyanates des séries benzéniques et naphtaléniques ou des mélanges de ces composés. A titre d'exemples d'arylène-diisocyanates pouvant être utilisés aux fins de l'invention, on peut citer les suivants : m-phénylène-diisocyanate, xénylène 4,4'-diisocyanate, naphtalène-1,5'-di-isocyanate, 3,3'-bitolylène-4,4'-diisocyanate, diphénylène-méthane-4,4'-diisocyanate (MDI), 4-chlorophénylène-2,4'-diisocyanate, dianisidinediisocyanate, diphénylène-éther-4,4'-diisocya-nate, et des isocyanates polymères, tels que le polyméthylène polyphénylène isocyanate. D'autres arylène-diisocyanates qui peuvent être utilisés comprennent notamment les dérivés substitués par des groupes alkyle inférieur ou des groupes alcoxy. On peut également utiliser des diisocyanates aliphatiques, tels que le dicyclohexylméthyl-4,4'-diisocyanate ou des isocyanates cycloaliphatiques comme l'isophorone-diisocyanate (IPDI). Des mélange d'arylène-diisocyanates et de diisocyanates aliphatiques ou cycloaliphatiques peuvent être utilisés dans des compositions selon la présente invention.

La quantité de polyisocyanate mise à réagir avec le polyol devra être suffisante pour fournir au moins une mole de diisocyanate par groupe hydroxy du polyol. Un rapport NCO/OH supérieur à environ 1, de préférence égal ou supérieur à 1,1 est avantageux.

Bien entendu, les compositions adhésives de polyuréthane selon l'invention peuvent renfermer divers additifs classiquement utilisés dans le domaine technique en cause (catalyseurs pour accélérer la réticulation, etc...) dont la quantité n'excédera généralement pas 1% en poids de cette composition.

Comme indiqué plus haut, l'utilisation de polyéthylèneimine à titre de promoteur d'adhésion permet de résoudre les problèmes d'adhérence des joints étanches des échangeurs avec les membranes semi-perméables d'une manière générale, et en particulier les membranes semi-perméables glycérinées, éventuellement humides.

Le promoteur d'adhésion selon l'invention est particulièrement bien adapté aux membranes semi-perméables chargées négativement et conformées dans un seul type de matériau qui comprend notamment un homo- ou copolymère de l'acrylonitrile sous forme d'une membrane plane ou d'un faisceau de fibres creuses.

Un tel matériau, quand il est constitué d'un ou de plusieurs copolymères d'acrylonitrile, peut comprendre :
(1) un copolymère de l'acrylonitrile et d'au moins un monomère anionique ou anionisable, renfermant, le cas échéant, des unités provenant d'au moins un autre monomère à insaturation oléfinique capable d'être copolymérisé avec l'acrylonitrile, ou
(2) un copolymère de l'acrylonitrile et d'au moins un monomère anionique ou anionisable et d'au moins un monomère non ionique et non ionisable.

Certains de ces composés macromoléculaires, ainsi que les divers monomères susceptibles d'être retenus comme matières premières de leur fabrication, sont plus amplement décrits dans le brevet américain n° 4,545,910 redélivré sous le n° Re.34239.

Parmi ces composés macromoléculaires, ceux avec lesquels le promoteur d'adhésion selon l'invention est particulièrement bien adapté sont définis sous (1) ci-avant. En particulier, l'invention convient particulièrement bien à ceux pour lesquels le comonomère anionique ou anionisable est oléfiniquement insaturé et porteur de groupements anioniques choisis parmi les groupes sulfonate, carboxyle, phosphate, phosphonate et sulfate, et plus particulièrement encore, quand ce comonomère est le méthallylsulfonate de sodium.

Bien entendu, la nature précise du contre-ion des groupements anioniques n'est pas essentielle au bon fonctionnement de l'invention.

Parmi les monomères à insaturation oléfinique capables d'être copolymérisés avec l'acrylonitrile, on peut citer les acrylates d'alkyle et, en particulier, l'acrylate de méthyle.

Les exemples ci-après illustrent l'invention sans aucunement en limiter la portée.

Les exemples comparatifs 1 et 2 correspondent à l'art connu et décrit dans la demande européenne n° 0329474.

L'exemple comparatif 3 correspond à l'art connu et décrit dans la demande européenne n° 0573310.

Les exemples 4 à 6 illustrent l'invention.

### Préparation, en deux composants, d'une composition adhésive de polyuréthane (PUR) incorporant une PEI pour les exemples 4 à 6

Dans une cuve munie d'un agitateur, on introduit une quantité déterminée de polyol (mesure du volume ou pesée). On pèse la quantité correspondante de PEI (en fonction du pourcentage souhaité) et l'on introduit cette quantité à son tour dans la cuve. On agite alors sous atmosphère d'azote ou d'air sec pendant deux heures. Le mélange est ensuite dégazé sous vide avant son utilisation pour la préparation du polyuréthane par mélange avec de l'isocyanate, lui-même dégazé sous vide (pour éviter les bulles).

Dans les exemples 4 à 6, le polyol est composé principalement de polyesters de l'acide ricinoléique type ricinoléates de pentaérythritol. Au polyol est associé un catalyseur organoétain de formule dioctyl diricinoléate d'étain dans une proportion inférieure à 1 % massique du PUR. Le taux de catalyseur peut être ajusté suivant le temps de gel désiré.

Pour environ la moitié de sa composition (premier composant), le PUR contient une partie dite isocyanate à base de prépolymère d'isocyanate aliphatique obtenu par réaction d'un excès de diisocyanate tel que décrit plus haut avec du glycérol.

L'autre partie du PUR (second composant) contient le mélange stable de polyol, PEI et de catalyseur précité. Les proportions de la partie isocyanate et de la partie polyol sont calculées en fonction du poids équivalent isocyanate (NCO) et du poids équivalent hydroxyle (OH) afin d'avoir un ratio NCO/OH égal à 1,1.

### Empotage des fibres creuses

L'empotage avec une composition adhésive de polyuréthane ou PUR nécessite, au préalable, un séchage, au minimum, des extrémités du faisceau de fibres qui seront en contact avec le PUR.

Ensuite, on prépare la composition adhésive de polyuréthane en mélangeant les premier et second composants mentionnés au paragraphe précédent pour les besoins des exemples 4 à 6; tandis que :
- dans le cas des exemples comparatifs 1 et 2, on mélange les trois composants polyol, isocyanate et amine qui ont été conservés séparément.
- dans le cas de l'exemple comparatif 3, on mélange le composant isocyanate et le composant polyol renfermant un promoteur d'adhésion type diamine tertiaire.

Aussitôt après, on coule la composition dans un réservoir muni de tubulures reliées aux deux extrémités d'un boîtier tubulaire où un faisceau de fibres creuses a été introduit et où il doit être empoté à ses deux extrémités. Préalablement à cette opération, le boîtier a été muni de bouchons à ses extrémités pour contenir la colle lors de l'empotage proprement dit.

On met en rotation le boîtier contenant le faisceau de fibres autour d'un axe perpendiculaire à l'axe longitudinal du faisceau et passant à mi longueur du dispositif. Sous l'effet de la force centrifuge, le PUR est déplacé aux extrémités du faisceau de fibres et vient enrober celles-ci. Le PUR pénètre également à l'intérieur des fibres mais cette pénétration est limitée par la compression de l'air prisonnier à l'intérieur des fibres. En outre, cette pénétration est maîtrisée en jouant sur deux paramètres : la force centrifuge (i.e. la vitesse de rotation du dispositif) et la température de l'air.

Après polymérisation du PUR, les bouchons sont enlevés et l'empotage est tranché à un niveau au-delà de la pénétration dans les fibres de façon à ce que les fibres soient ouvertes pour permettre la circulation de fluide à l'intérieur des fibres.

### Protocole de mesure des forces d'adhésion d'un polyuréthane (PUR) sur fibres creuses

Dans les exemples 1 à 6, on a déterminé les forces d'adhésion des compositions adhésives de polyuréthane (PUR) durcies sur des membranes semi-perméables (faisceau de fibres creuses) comme suit :

On coupe transversalement dans l'empotage d'un faisceau des tranches circulaires de 0,5 mm de colle PUR durcie incorporant les fibres creuses. Seules les tranches d'empotage avec lumière des fibres libres (i.e. dépourvues de colles à l'intérieur des fibres creuses) sont conservées pour la mesure.

Pour les besoins de la mesure, les tranches circulaires sont découpées pour former deux côtés, opposés et parallèles, distants de 20 mm : la distance séparant ces deux côtés constitue la largeur de l'échantillon.

Ensuite, l'échantillon est disposé verticalement sur la machine de traction (les deux côtés opposés, parallèles et distants de 20 mm de l'échantillon sont alors verticaux) et tenu entre les deux mors de cette machine par ses deux extrémités circulaires de telle sorte que les deux mors soient distants l'un de l'autre de 15 mm.

Le mors supérieur est connecté à un dynamomètre. Lors de la mesure effectuée à température et hygrométrie ambiantes, le mors se déplace verticalement à la vitesse de 5 mm/min. et exerce une traction sur l'échantillon. La force de cette traction, exprimée en Newton, est mesurée en permanence par le dynamomètre. A la rupture, l'appareil détecte une chute de la force de traction et stoppe son déplacement pour une variation instantanée de 20 % de force exercée.

En outre, pour distinguer le type de rupture (rupture des forces de cohésion du polyuréthane (PUR) ou rupture des forces d'adhésion entre le PUR et la membrane ou, dans le meilleur des cas, rupture des forces de cohésion de la membrane composant la fibre), un examen microscopique est fait sur chaque échantillon après passage sur la machine de traction.

Ainsi :
. une rupture par perte d'adhésion se traduit par une non-déformation des fibres creuses sans aucun déchirement visible des fibres et un décollement du PUR d'avec les fibres ;
. une rupture sans perte d'adhésion se traduit par une déformation importante des fibres avec finalement un déchirement des fibres.

### Exemples 1 à 6

La nature et la quantité des composants des compositions adhésives de polyuréthane des exemples comparatifs 1 à 3 et des exemples 4 à 6 illustrant la présente invention figurent au tableau ci-après.

Dans ces exemples, la quantité de composant isocyanate mise à réagir avec le polyol est telle que le rapport NCO/OH soit égal à 1,1.

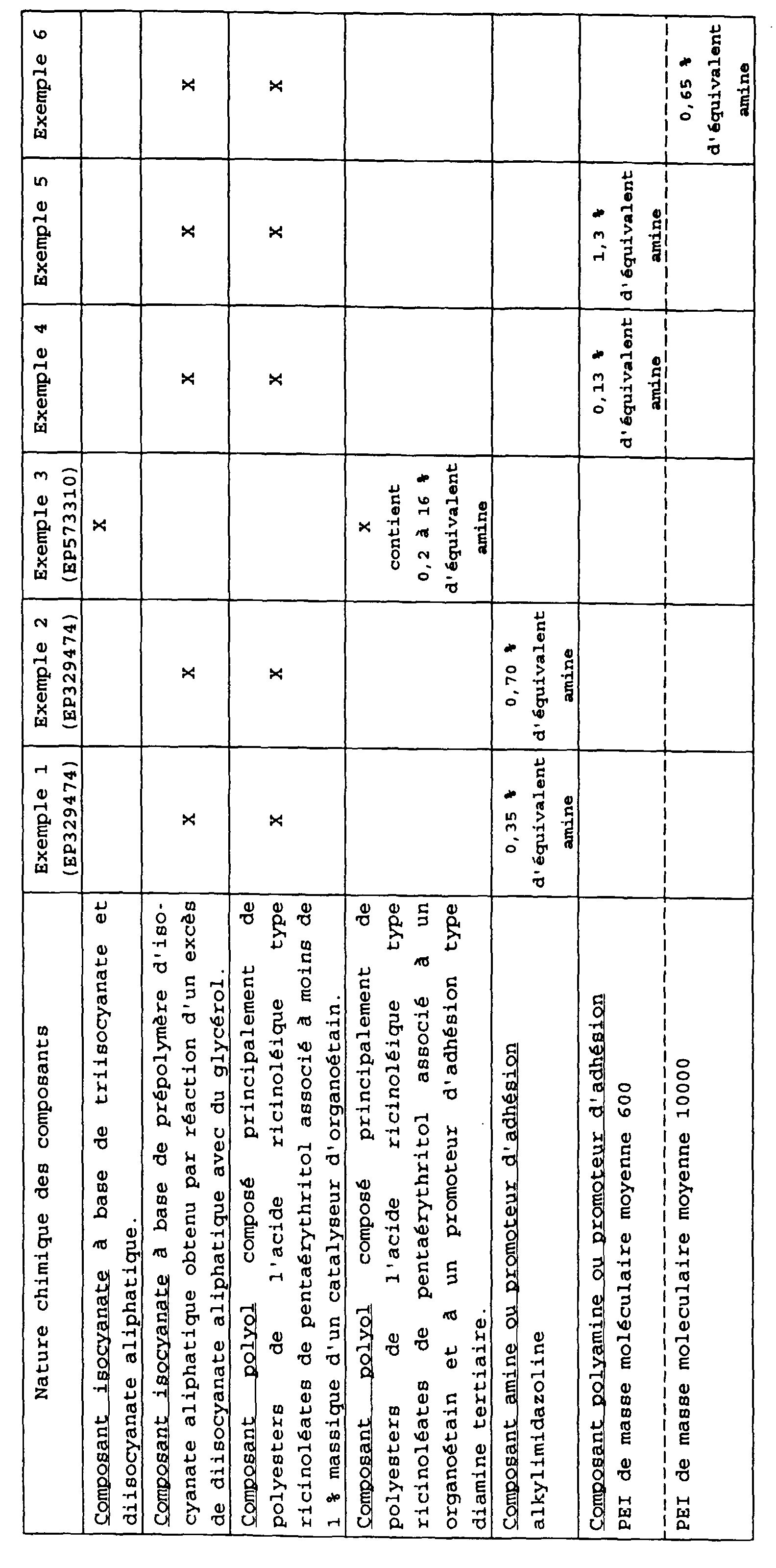

On a déterminé, comme indiqué ci-avant, les forces d'adhésion des polyuréthanes des exemples 1 à 6 sur un faisceau de fibres creuses conformées dans un seul type de matériau comprenant un copolymère de l'acrylonitrile et de méthallylsulfonate de sodium, ce matériau étant fabriqué sous la dénomination commerciale AN69 par la société HOSPAL.

La moyenne des résultats obtenus sur au moins cinq tranches d'empotage figurent au tableau ci-après.

| Exemple No. | Forces d'adhesion en Newton | Examen microscopique |
|---|---|---|
| 1 | 3,9 ± 0,9 | Rupture par défaut d'adhésion |
| 2 | 8,3 ± 0,8 | Rupture par défaut d'adhésion |
| 3 | 5,6 ± 0,7 | Rupture par défaut d'adhésion |
| 4 | 17,6 ± 2,7 | Rupture par déchirement des fibres sans décollement visible du PUR à la fibre creuse |
| 5 | 18,5 ± 2,2 | Rupture par déchirement des fibres sans décollement visible du PUR à la fibre creuse |
| 6 | 13,8 ± 2,4 | Déformation des fibres. Rupture par manque d'adhésion (aucune fibre déchirée) |

Au vu de ces résultats, il apparaît nettement que la PEI de masse moléculaire moyenne 600 conduit aux meilleures performances sur une fibre creuse faite dans un matériau fortement glycériné comme le sont les copolymères d'acrylonitriles porteurs de groupements anioniques.

Enfin, on a remarqué la bonne flexibilité des compositions de polyuréthane durcies selon l'invention car elles ne sont ni trop dures (i.e. cassantes) ni trop molles et permettent un tranchage sans difficulté après empotage.

## Revendications

1. Utilisation de la polyéthylèneimine comme promoteur d'adhésion destiné à coopérer avec une composition adhésive de polyuréthane apte à former un joint étanche dans des échangeurs sous la forme de membranes planes ou d'un faisceau de fibres creuses.

2. Procédé de fabrication d'un joint étanche dans des échangeurs sous la forme de membranes planes ou d'un faisceau de fibres creuses à l'aide d'une composition adhésive de polyuréthane, caractérisé en ce qu'il comprend principalement les étapes de :
a1) traiter la surface extérieure des canaux formés par les membranes planes ou des fibres creuses afin de la revêtir avec le promoteur d'adhésion constitué d'au moins une polyéthylèneimine ;
b1) encapsuler ou enrober les extrémités desdits canaux ou desdites fibres creuses dans le mélange liquide d'une composition adhésive de polyuréthane avant que ce mélange ne se gélifie ;
c1) puis, procéder aux opérations habituelles et bien connues de l'homme de l'art pour former, selon le cas:
. un joint étanche dans des échangeurs sous la forme de membranes planes,
. ou une cloison cylindrique de séparation dans des échangeurs sous la forme d'un faisceau de fibres creuses.

3. Procédé selon la revendication 2, caractérisé en ce que l'on utilise une polyéthylèneimine de masse moléculaire moyenne variant de 600 à 60000.

4. Procédé de fabrication d'un joint étanche dans des échangeurs sous la forme de membranes planes ou d'un faisceau de fibres creuses à l'aide d'une composition adhésive de polyuréthane, caractérisé en ce qu'il comprend principalement les étapes de :
a2) préparer une composition adhésive de polyuréthane renfermant à titre de promoteur d'adhésion au moins une polyéthylèneimine ;
b2) encapsuler ou enrober les extrémités desdits canaux ou desdites fibres creuses dans le mélange liquide de la composition adhésive de polyuréthane obtenue à l'issue de l'étape (a2) avant que ce mélange ne se gélifie ;
c2) puis, procéder aux opérations habituelles et bien connues de l'homme de l'art pour former, selon le cas:
. un joint étanche dans des échangeurs sous la forme de membranes planes,
. ou une cloison cylindrique de séparation dans des échangeurs sous la forme d'un faisceau de fibres creuses.

5. Procédé selon la revendication 4, caractérisé en ce que la masse moléculaire moyenne de la polyéthylèneimine est comprise entre 200 et 20000.

6. Procédé selon la revendication 5, caractérisé en ce que la masse moléculaire moyenne de la polyéthylèneimine varie de 600 à 10000.

7. Procédé selon l'une quelconque des revendications 4 à 6, caractérisé en ce que la quantité de polyéthylèneimine dans la composition adhésive de polyuréthane est comprise entre 0,065 et 2,6 % d'équivalent amine rapporté à la somme des autres groupements alcool et isocyanate présents.

8. Procédé selon la revendication 7, caractérisé en ce que la quantité de polyéthylèneimine dans la composition adhésive de polyuréthane est comprise entre 0,13 et 1,3 % d'équivalent amine rapporté à la somme des autres groupements alcool et isocyanate présents.

9. Composition adhésive de polyuréthane apte à former un joint étanche dans des échangeurs sous la forme de membranes planes ou d'un faisceau de fibres creuses, caractérisée en ce qu'elle renferme au moins une polyéthylèneimine.

10. Composition selon la revendication 9, caractérisée en ce que la masse moléculaire moyenne de la polyéthylèneimine est comprise entre 200 et 20000.

11. Composition selon la revendication 10, caractérisée en ce que la masse moléculaire moyenne de la polyéthylèneimine varie de 600 à 10000.

12. Composition selon l'une quelconque des revendications 9 à 11, caractérisée en ce que la quantité de polyéthylèneimine dans la composition adhésive de polyuréthane est comprise entre 0,065 et 2,6 % d'équivalent amine rapporté à la somme des autres groupements alcool et isocyanate présents.

13. Composition selon la revendication 12, caractérisée en ce que la quantité de polyéthylèneimine dans la composition adhésive de polyuréthane est comprise entre 0,13 et 1,3 % d'équivalent amine rapporté à la somme des autres groupements alcool et isocyanate présents.

14. Composition selon l'une quelconque des revendications 9 à 13, caractérisée en ce qu'elle comprend, avant utilisation, deux composants conservés séparément, qui sont respectivement un premier composant constitué d'au moins un polyol, d'au moins un polyéthylèneimine et, éventuellement, d'un catalyseur, et un second composant constitué d'au moins un polyisocyanate, ces deux composants étant mélangés au moment de la fabrication du joint étanche de polyuréthane.

## Patentansprüche

1. Verwendung von Polyethylenimin als Haftungspromotor für die Kooperation mit einer Polyurethan-Klebstoffzusammensetzung, die für die Bildung einer dichten Verbindungsstelle in Austauschern in Form von ebenen Membranen oder eines Hohlfaserbündels geeignet ist.

2. Verfahren zur Herstellung einer dichten Verbindungsstelle in Austauschern in Form von ebenen Membranen oder eines Hohlfaserbündels mit Hilfe einer Polyurethan-Klebstoffzusammensetzung, dadurch gekennzeichnet, daß es hauptsächlich die folgenden Stufen umfaßt:
a1) Behandeln der äußeren Oberfläche der Kanäle, die durch die ebenen Membranen oder Hohlfasern gebildet werden, um die äußere Oberfläche mit dem Haftungspromotor zu bedecken, der aus mindestens einem Polyethylenimin besteht;
b1) Einkapseln oder Einbetten der Enden der genannten Kanäle oder der genannten Hohlfasern in die flüssige Mischung einer Polyurethan-Klebstoffzusammensetzung, bevor diese Mischung geliert;
c1) anschließendes Durchführen von üblichen und dem Fachmann auf diesem Gebiet bekannten Operationen unter Bildung, je nach Fall,
. einer dichten Verbindungsstelle in Austauschern in Form von ebenen Membranen,
. oder einer zylindrischen Trennwand in Austauschern in Form eines Hohlfaserbündels.

3. Verfahren nach Anspruch 2, dadurch gekennzeichnet, daß man ein Polyethylenimin mit einer mittleren Molekularmasse verwendet, die von 600 bis 60 000 variiert.

4. Verfahren zur Herstellung einer dichten Verbindungsstelle in Austauschern in Form von ebenen Membranen oder eines Hohlfaserbündels unter Verwendung einer Polyurethan-Klebstoffzusammensetzung, dadurch gekennzeichnet, daß es hauptsächlich die folgenden Stufen umfaßt:
a2) Herstellen einer Polyurethan-Klebstoffzusammensetzung, die als Haftungspromotor mindestens ein Polyethylenimin enthält;
b2) Einkapseln oder Einbetten der Enden der genannten Kanäle oder der genannten Hohlfasern in die flüssige Mischung der Polyurethan-Klebstoffzusammensetzung, die in der Stufe (a2) erhalten worden ist, bevor diese Mischung geliert;
c2) anschließendes Durchführen üblicher und dem Fachmann auf diesem Gebiet allgemein bekannter Operationen zur Herstellung, je nach Fall,
. einer dichten Verbindungsstelle in Austauschern in Form von ebenen Membranen,
. oder einer zylindrischen Trennwand in Austauschern in Form ei nes Hohlfaserbündels.

5. Verfahren nach Anspruch 4, dadurch gekennzeichnet, daß die mittlere Molekularmasse des Polyethylenimins zwischen 200 und 20 000 liegt.

6. Verfahren nach Anspruch 5, dadurch gekennzeichnet, daß die mittlere Molekularmasse des Polyethylenimins von 600 bis 10 000 variiert.

7. Verfahren nach einem der Ansprüche 4 bis 6, dadurch gekennzeichnet, daß die Polyethylenimin-Menge in der Polyurethan-Klebstoffzusammensetzung zwischen 0,065 und 2,6 % Aminäquivalent liegt, bezogen auf die Summe der anderen vorhandenen Alkohol- und Isocyanat-Gruppen.

8. Verfahren nach Anspruch 7, dadurch gekennzeichnet, daß die Polyethylenimin-Menge in der Polyurethan-Klebstoffzusammensetzung zwischen 0,13 und 1,3 % Aminäquivalent liegt, bezogen auf die Summe der anderen vorhandenen Alkohol- und Isocyanat-Gruppen.

9. Polyurethan-Klebstoffzusammensetzung, die geeignet ist für die Bildung einer dichten Verbindungsstelle in Austauschern in Form von ebenen Membranen oder eines Hohlfaserbündels, dadurch gekennzeichnet, daß sie mindestens ein Polyethylenimin enthält.

10. Zusammensetzung nach Anspruch 9, dadurch gekennzeichnet, daß die mittlere Molekularmasse des Polyethylenimins zwischen 200 und 20 000 liegt.

11. Zusammensetzung nach Anspruch 10, dadurch gekennzeichnet, daß die mittlere Molekularmasse des Polyethylenimins von 600 bis 10 000 variiert.

12. Zusammensetzung nach einem der Ansprüche 9 bis 11, dadurch gekennzeichnet, daß die Polyethylenimin-Menge in der Polyurethan-Klebstoffzusammensetzung zwischen 0,065 und 2,6 % Aminäquivalent liegt, bezogen auf die Summe der anderen vorhandenen Alkohol- und Isocyanat-Gruppen.

13. Zusammensetzung nach Anspruch 12, dadurch gekennzeichnet, daß die Polyethylenimin-Menge in der Polyurethan-Klebstoffzusammensetzung zwischen 0,13 und 1,3 % Aminäquivalent liegt, bezogen auf die Summe der anderen vorhandenen Alkohol- und Isocyanat-Gruppen.

14. Zusammensetzung nach einem der Ansprüche 9 bis 13, dadurch gekennzeichnet, daß sie vor ihrer Verwendung zwei getrennt voneinander aufbewahrte Bestandteile umfaßt, bei denen es sich jeweils handelt um einen ersten Bestandteil, bestehend aus mindestens einem Polyol, mindestens einem Polyethylenimin und gegebenenfalls einem Katalysator, und einen zweiten Bestandteil, der aus mindestens einem Polyisocyanat besteht, wobei diese beiden Bestandteile zum Zeitpunkt der Herstellung der dichten Polyurethan-Verbindungsstelle miteinander gemischt werden.

## Claims

1. Use of polyethyleneimine as an adhesion promoter intended to co-operate with a polyurethane adhesive composition capable of forming a seal in exchangers in the form of flat membranes or of a bundle of hollow fibres.

2. Process for producing a seal in exchangers in the form of flat membranes or of a bundle of hollow fibres using a polyurethane adhesive composition, characterized in that it mainly comprises the steps of:
a1) treating the outer surface of the channels formed by the flat membranes or hollow fibres so as to coat it with the adhesion promoter consisting of at least one polyethyleneimine;
b1) encapsulating or embedding the ends of the said channels or of the said hollow fibres in the liquid mixture of a polyurethane adhesive composition before this mixture gels;
c1) then, carrying out the usual operations, well known to those skilled in the art, for forming, depending on the case:
. a seal in exchangers in the form of flat membranes,
. or a cylindrical separating partition in exchangers in the form of a bundle of hollow fibres.

3. Process according to Claim 2, characterized in that a polyethyleneimine having an average molecular mass varying from 600 to 60,000 is used.

4. Process for producing a seal in exchangers in the form of flat membranes or of a bundle of hollow fibres using a polyurethane adhesive composition, characterized in that it comprises mainly the steps of:
a2) preparing a polyurethane adhesive composition containing at least one polyethyleneimine as adhesion promoter;
b2) encapsulating or embedding the ends of the said channels or of the said hollow fibres in the liquid mixture of the polyurethane adhesive composition obtained after step (a2) before this mixture gels;
c2) and then, carrying out the usual operations, well known to those skilled in the art, for forming, depending on the case:
. a seal in exchangers in the form of flat membranes,
. or a cylindrical separating partition in exchangers in the form of a bundle of hollow fibres .

5. Process according to Claim 4, characterized in that the average molecular mass of the polyethyleneimine is between 200 and 20,000.

6. Process according to Claim 5, characterized in that the average molecular mass of the polyethyleneimine varies from 600 to 10,000.

7. Process according to any one of Claims 4 to 6, characterized in that the amount of polyethyleneimine in the polyurethane adhesive composition is between 0.065 and 2.6% of amine equivalent with respect to the sum of the other - alcohol and isocyanate - groups present.

8. Process according to Claim 7, characterized in that the amount of polyethyleneimine in the polyurethane adhesive composition is between 0.13 and 1.3% of amine equivalent with respect to the sum of the other - alcohol and isocyanate - groups present.

9. Polyurethane adhesive composition capable of forming a seal in exchangers in the form of flat membranes or of a bundle of hollow fibres, characterized in that it contains at least one polyethyleneimine.

10. Composition according to Claim 9, characterized in that the average molecular mass of the polyethyleneimine is between 200 and 20,000

11. Composition according to Claim 10, characterized in that the average molecular mass of the polyethyleneimine varies from 600 to 10,000.

12. Composition according to any one of Claims 9 to 11, characterized in that the amount of polyethyleneimine in the polyurethane adhesive composition is between 0.065 and 2.6% of amine equivalent with respect to the sum of the other - alcohol and isocyanate - groups present.

13. Composition according to Claim 12, characterized in that the amount of polyethyleneimine in the polyurethane adhesive composition is between 0.13 and 1.3% of amine equivalent with respect to the sum of the other - alcohol and isocyanate - groups present.

14. Composition according to any one of Claims 9 to 13, characterized in that it comprises, before use, two components kept separately, which are, respectively, a first component consisting of at least one polyol, at least one polyethyleneimine and, optionally, a catalyst, and a second component consisting of at least one polyisocyanate, these two components being mixed at the time of producing the polyurethane seal.
